# EUROPEAN PATENT SPECIFICATION

(11) **EP 4 256 465 B1**
(45) Date of publication and mention of the grant of the patent: **16.04.2025**
(21) Application number: 21824540.5
(22) Date of filing: 02.12.2021
(51) Int. Cl.: G06N 3/04, G06V 10/14

(54) **SYSTEM AND METHOD FOR DETERMINING DAMAGE ON PLANTS AFTER HERBICIDE APPLICATION**
SYSTEM UND VERFAHREN ZUR BESTIMMUNG DER SCHÄDIGUNG VON PFLANZEN NACH HERBIZIDANWENDUNG
SYSTÈME ET PROCÉDÉ DE DÉTERMINATION DE DOMMAGES SUR DES PLANTES APRÈS APPLICATION D'UN HERBICIDE

(30) Priority: 03.12.2020 EP 20211605
(43) Date of publication of application: 11.10.2023
(73) Proprietor: BASF SE, 67056 Ludwigshafen am Rhein (DE)
(72) Inventor: BERECIARTUA-PEREZ, Aranzazu, 48160 Derio (Bizkaia) (ES); GOMEZ ZAMANILLO, Laura, 48160 Derio (Bizkaia) (ES); PARRA RAPADO, Liliana, 67117 Limburgerhof (DE); PICON RUIZ, Artzai, 48160 Derio (Bizkaia) (ES); KLUKAS, Christian, 67117 Limburgerhof (DE); EGGERS, Till, 67056 Ludwigshafen (DE); ECHAZARRA HUGUET, Jone, 48160 Derio (Bizkaia) (ES); NAVARRA-MESTRE, Ramon, 67117 Limburgerhof (DE)
(74) Representative: BASF IP Association
(86) International application number: PCT/EP2021/084072
(87) International publication number: WO 2022/117772

(56) References cited:
- SHARADA P. MOHANTY ET AL: "Using Deep Learning for Image-Based Plant Disease Detection", FRONTIERS IN PLANT SCIENCE, 22 September 2016 (2016-09-22), pages 1 - 10, XP055385570, Retrieved from the Internet <URL:https://www.ncbi.nlm.nih.gov/pmc/articles/PMC5032846/pdf/fpls-07-01419.pdf> [retrieved on 20170627], DOI: 10.3389/fpls.2016.01419
- ANONYMOUS: "ResNet (34, 50, 101): Residual CNNs for Image Classification Tasks", 1 May 2019 (2019-05-01), XP055799413, Retrieved from the Internet <URL:https://web.archive.org/web/20190501042205/https://neurohive.io/en/popular-networks/resnet/> [retrieved on 20210428]
- ANONYMOUS: "machine learning - Why do activation functions have to be monotonic? - Data Science Stack Exchange", 8 June 2019 (2019-06-08), XP055799150, Retrieved from the Internet <URL:https://datascience.stackexchange.com/questions/9233/why-do-activation-functions-have-to-be-monotonic> [retrieved on 20210427]

## Description

### Technical Field

The present invention generally relates to electronic data processing, and more particularly, relates to image processing methods, computer program products and systems for determining damage on crop plants at an agricultural growth location after herbicide application.

### Background

In crop farming, the process of developing and testing new plant protection products (e.g., herbicides) typically involves analyzing the response of plant species grown at an agricultural growth location (e.g., a greenhouse or an agricultural field) to different protection products and doses in a controlled way. However, protection products may also cause damages to the plants that they intend to protect. The assessment of the damage on the crop plants provides valuable information to the testing process. Typically, such damage assessment is performed on a daily basis in all test trials. Visual evaluation of every plant by experts involve time consuming process and lack repeatability. This assessment of growth locations (e.g., pots) is often performed in comparison with an untreated reference growth location. In a greenhouse context such reference growth locations are often referred to as control pots. A damage value which is typically determined by human experts to assess the development of a plant after herbicide application by comparing the treated plant with an untreated plant is the so-called phytotoxicity. According to EPPO, phytotoxicity is the capacity of a compound (such as a plant protection product) to cause temporary or long-lasting damage to plants. The method and rules for phytotoxicity assessment are described in detail in Bulletin OEPP/EPPO Bulletin(2014)44(3), 265-273 in section PP 1/135 (4) Phytotoxicity assessment. The same method can be applied to crop plants as well as to weed plants. When applying the method to weed plants, it is often referred to as herbicide control. Phytotoxicity values can range from 0 to 100%. In experiments involving a plurality of experts, inter-rater variability was estimated around 10-15%, and even higher depending on the growth conditions and seasonal variations. Sometimes the phytotoxicity value indicating the plant damage is also referred to as "Plant Disease Control against Untreated", or - in short - PDCU value.

Nevertheless, when herbicide impact assessment is performed visually by expert people, such manual assessment always depends on the experience of the individual expert which does not allow for an objective and accurate quantitative assessment of the damages caused by herbicides.

Mohanty SP, Hughes DP and Salathé M (2016) Using Deep Learning for Image-Based Plant Disease Detection. Front. Plant Sci.7: 1419. doi: 10.3389/fpls.2016.01419 describes neural networks that classify images according to crop-disease pairs that are depicted on the images. More in detail, the paper explains a two-step approach with removing background information from the images by using color re-coding and classifying the pre-processed images by a convolutional neural network.

### Summary

There is therefore a need for tools which support an objective and accurate quantitative assessment of the crop damage caused by herbicides.

This technical problem is solved by the embodiments - a computer-implemented method, a computer program product, and a computer system - for estimating damage on plants caused by herbicide application by using a regression deep learning model as claimed in the independent claims.

The regression deep learning model is trained such that different damage types (e.g., necrosis, leaf curling, bleaching, etc.) that are known as a consequence of herbicide application are taken into account for plants of a variety of plant species (e.g., crop species such as GLXMA, TRZAW, or weed species, such as ECHCG, AMARE, etc.) at different numbers of days after the treatment of the respective plants. For example, necrosis is a form of cell injury which results in the premature death of cells in living tissue by autolysis. Necrosis is caused by factors external to the cell or tissue, such as infection, toxins, or trauma which result in the unregulated digestion of cell components. Therefore, necrosis can occur as a consequence of herbicide application. Typically, a distinction is made between the damage subtypes early and late necrosis. Another damage type which can occur as a consequence of herbicide application is leaf curling (a plant disease characterized by distortion). Also, leaf curling is typically distinguished by the damage subtypes early and late leaf curling. A further damage type caused by herbicide application is the colouring of the plant leaves. Colouring can be divided into three damage subtypes: white colouring (often referred to as bleaching), purple colouring (also referred to as bleaching), and yellow colouring (chlorosis).

The following list summarizes damage symptoms (1) to (7) observed as a consequence of herbicide treatment and their respective descriptions, by name @ description of plant damage symptoms after herbicide treatment:
(1) Coloring white (bleaching)
   @ White parts on one or more leaves of the plant.
(2) Coloring purple
   @ Purple or pink parts on one or more leaves of the plant.
(3) Coloring yellow (chlorosis)
   @ Yellow or lighter green parts on one or more leaves of the plant.
(4) Early necrosis
   @ One or more leaves with necrotic parts. (Spotting also included).
(5) Late necrosis
   @ One or more dead leaves.
(6) Early leaf curling
   @ One or a few leaves with curled parts.
(7) Late leaf curling
   @ Some leaves with very curled parts.

Every herbicide treatment may cause one or more symptoms at a time. A further damage type caused by herbicide application is biomass reduction as a consequence of a reduction of the number of leaves, a reduction in leaf surface or a reduced growth in height. Not all symptoms (damage types) have the same relevance for damage estimation. Typically, the experts consider phytotoxicity as a mixed value where biomass reduction and the detected symptom(s) are considered accordingly.

In one embodiment, a computer system for determining plant damage caused by herbicide application includes an interface to receive a zenithal image representing a real-world situation at an agricultural growth location with one or more non-overlapping plants. Non-overlapping plants as used herein means that there is no overlap of plant elements belonging to different plants. However, for example, overlapping leaves of a single plant can be shown on the image. The one or more plants shown on the image are associated with a corresponding plant species identifier indicating the species of the plant shown on the image. That is, the plants on a single zenithal image for which the damage is to be determined are of the same species. The one or more plants have been subject to an herbicide treatment and the zenithal image was recorded a certain number of days after this treatment. The number of days after treatment associated with the zenithal image is known. For example, this information may be stored in a separate database or it may even be part of the metadata of the zenithal image itself. Dependent on the herbicide and the number of days after treatment the one or more plants on the image may show damage symptoms of one or more of the above described damage types.

For example, the received image may be taken by a camera with a resolution that is high enough to visualize the damage symptoms on the plants. Typically, the image includes representations of multiple plants and soil. In a field situation, crop plants and weed plants may be shown on the image. For example, the image may be recorded by a camera mounted on a drone while the drone is flying over the agricultural growth location. In another example, the image may be taken with a camera of a mobile device (e.g., a smart phone) by a human user (e.g., a farmer) from an elevated position (e.g., from a tractor). In general, it is advantageous to position the camera such that the recorded image shows a two-dimensional zenithal view of a part of the agricultural growth location where the plants of interest are growing.

When images are taken by the camera, the maximum distance between the camera and the plants for providing sufficient details regarding the damage symptoms on the plants depends on the image resolution of the camera. When using a camera with high resolution the distance between the plants and the camera can be chosen bigger than when using a camera with lower resolution (assuming a fixed focal length of the camera (no zoom)). That is, a camera mounted on a drone which, while flying over the field, has a higher distance to the plants than a camera mounted on a tripod in the field, typically needs a higher resolution to provide the same level of accuracy regarding the damage symptoms represented in the image.

An image pre-processing module of the computer system segments the received image into pixels associated with plant elements and into pixels associated with non-plant elements to obtain a masked image with the pixels associated with non- plant elements being removed from the image. This is achieved by using a damage agnostic plant segmentation algorithm. Damage agnostic plant segmentation algorithms are algorithms which can distinguish plant pixels from non-plant pixels even when the plant shows damage symptoms. In particular, most plant segmentation algorithms fail to distinguish plant pixels associated with necrosis symptoms from pixels associated with background soil. The meaning of "damage agnostic" as used herein is comparable to the use of the term "agnostic" in computing in general. In computing, an agnostic software component is unaware or noncommittal regarding the specific nature of the components or input with which it interacts. The term "damage agnostic plant segmentation algorithm" herein stands for a plant segmentation algorithm which correctly classifies image pixels into plant or non-plant pixels also for any pixel which is associated with any damage symptom of a plant caused by herbicide treatment.

In one embodiment, a damage agnostic plant segmentation algorithm may include the following steps: applying a gaussian filter to the received image to obtain a filtered image with less plant details; transforming the filtered image to the HSV color space; obtaining, through thresholding of the H and S planes, a mask for the plant wherein an initial mask obtained from the H plane removes the pixels of the transformed image presenting colors that are not likely to be present in the plant, and wherein an initial mask obtained from the S plane removes the parts of the transformed image that belong to uniform background of the image; and post-processing the initial masks to obtain a segmentation mask by reducing noise in the image, the segmentation mask applied to the received image to obtain the masked image.

In an alternative embodiment, the damage agnostic plant segmentation algorithm, when being executed, performs the following steps: providing at least one channel of the received image - being an RGB image - to a semantic regression neural network, the semantic regression neural network trained to estimate at least a near-infrared channel from the at least one channel of the received image, the semantic regression neural network having a topology based on a convolutional segmentation neural network with its last layer being substituted by a monotonic activation function and its loss function being substituted by a regression loss function, to learn a pixel-wise regression transformation that transforms any RGB channel from an RGB domain to a target domain comprising at least a near-infrared domain; obtaining an estimate of the near-infrared channel by applying the semantic regression neural network to the RGB image; providing a multi-channel image comprising at least one of the R-, G-, B-channels of the RGB image, and the estimated near-infrared channel, as test input to a semantic segmentation neural network, the semantic segmentation neural network trained with a training data set comprising multi-channel images of the test input type to segment the test input into pixels associated with plant elements and pixels not associated with plant elements; and segmenting the test input using the semantic segmentation neural network resulting in the segmentation mask indicating pixels of the test input associated with plant elements and indicating pixels of the test input not associated with plant elements, the segmentation mask applied to the received image to obtain the masked image.

The image pre-processing module may also implement an image resizing function. The masked image is provided as part of the test input to the input layer of the regression deep learning model. If the masked image does not match the size of the input layer the resizing function can be used to resize the masked image to match the size of the input layer while the aspect ratio of the original received image is preserved during the resizing of the masked image. Typically, the image size of high-resolution images taken by the camera is between 3000 x 4000 pixels and 4000 x 6000 pixels. The image size which can be processed by the deep learning model is limited by the memory of the Graphical Processing Unit (GPU) used for processing the model. A typical memory size of a GPU is 12 GB. This memory size is not sufficient to process such high-resolution images with such deep learning models. Therefore, the image pre-processing module can adjust the image size (in pixels) of the masked image to a rescaled masked image matching the size of the input layer of the regression deep learning model while preserving the aspect ratio of the original received image. Preferably, the rescaled image is reduced in size (compared to the received image) but the damage symptoms associated with any type of damage remain still visible (i.e. identifiable) on the rescaled image. For example, early-stage necrosis symptoms are small white spots occurring on the crop leaf surface. The resolution of the rescaled image should still be high enough to clearly visualize such spots.

The (resized) masked image is then provided to the input layer as part of the test input. The test input to the regression deep learning model further includes the number of days after treatment and the respective plant species identifier associated with the originally received image. The regression deep learning model has been trained with a training data set comprising a plurality of plant images for multiple plant species. For each plant species, the training data set includes a first subset of images showing one or more damaged plants of said plant species at an agricultural growth training location after herbicide treatment with at least some of the images of the first subset being recorded at different days after the herbicide treatment. Further, for each plant species, the training data set includes a second subset of images showing one or more healthy plants of said plant species growing in an untreated reference growth location (control location), with at least some of the images of the second subset being recorded at days corresponding to the different days after the herbicide treatment. In one embodiment, the training data set may also show herbicide variability in that different images of the training data set are associated with different applied herbicides where the different herbicides may consist of different chemical compositions or may only differ with regard to the applied dose. The agricultural growth training location can be different from the agricultural growth location used for obtaining the test input images for damage degree prediction. Therefore, such a location where test input images are obtained is not necessarily associated with a control location. However, as explained in more detail in the detailed description, an agricultural growth training location has a corresponding control location in its vicinity to enable the regression deep learning model to also learn the growth stage development of undamaged plants which provides the reference for PDCU estimates by experts for damaged plants.

Thereby, each training image of the training data set associated with a particular plant species has been annotated by an expert with a phytotoxicity value (PDCU*) which is used as ground truth for training the regression deep learning model. The phytotoxicity value reflects the expert's (subjective) assessment of a damage degree of one or more plants on the respective training image in comparison to plants of a control section in the vicinity of the agricultural growth location in accordance with predefined assessment rules. For example, such predefined rules can be the same or similar rules as described in the before mentioned Bulletin. Typically, the PDCU values are not just estimated by a single expert but rather by a group of experts. This adds errors to the process of PCDU value assessment. As mentioned above, the inter-rater variability is estimated around 10-15%, and even higher depending on the agricultural growth conditions and seasonal variation.

The use of the first and second subsets (damaged treated plants and healthy untreated plants) for training is advantageous for the regression deep learning model to learn the characteristics of the normal growth process of the plants without herbicide application. The normal growth process can be learned with a plurality of images of untreated plants. It is advantageous to run multiple trials to capture the variability. This allows the trained model to take into account also the biomass reduction symptom reflected by the respective ground truth PDCU values.

The training data images may be augmented by applying affine transformations to a subset of the training images while maintaining zoom factor and scale for the images of the subset.

The output of the trained regression deep learning model in response to the test input is a predicted phytotoxicity value (PDCU) for the test input. That is, the trained system allows a farming user to receive immediate feedback about the damage degree of plants shown on the test input image as a consequence of herbicide treatment. This information can be advantageously used by the farmer to adjust further treatments of the plants at the agricultural growth location.

The regression deep learning model may be based on a deep convolutional neural network topology using a regression loss function, and using an optimizer selected from the group of: stochastic gradient descent, RMSProp, and Adam.

The deep convolutional neural network topology can be any one of: VGG, ResNet, ResNeXt, SE-ResNet, SE-ResNeXt, SE-Net, DenseNet, Inception ResNet V2, Inception V3, Xception, NASNet, MobileNet, and MobileNet v2. For example, the topology may be a ResNet34 topology, the regression loss function may be mean-squared-error, and the optimizer may be stochastic gradient descent.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 illustrates a block diagram of a computer system for estimating damage on plants at an agricultural growing location after herbicide application using a single regression deep learning model according to an embodiment;
FIG. 2 illustrates the training of the regression deep learning model according to an embodiment;
FIG. 3 is a simplified flow chart of a computer-implemented method for estimating damage on plants at an agricultural growing location after herbicide application using a single regression deep learning model according to an embodiment;
FIGs. 4A to 4C are received images showing plants at agricultural growth locations with respective derived masked images according in to an embodiment;
FIG. 4D includes a zoomed portion of a masked image showing a plant with damage symptoms;
FIG. 5 illustrates different damage types on plants treated with herbicides in comparison to untreated plants;
FIG. 6 shows an example of some ground truth PDCU values assigned to some example training images;
FIGs. 7A, 7B are flowcharts illustrating two alternative implementations for damage agnostic plant segmentation algorithms;
FIG. 8 illustrates a block diagram of a damage agnostic plant segmentation module in accordance with the flowchart of FIG. 7B; and
FIG. 9 is a diagram that shows an example of a generic computer device and a generic mobile computer device, which may be used with the techniques described herein.

### Detailed Description

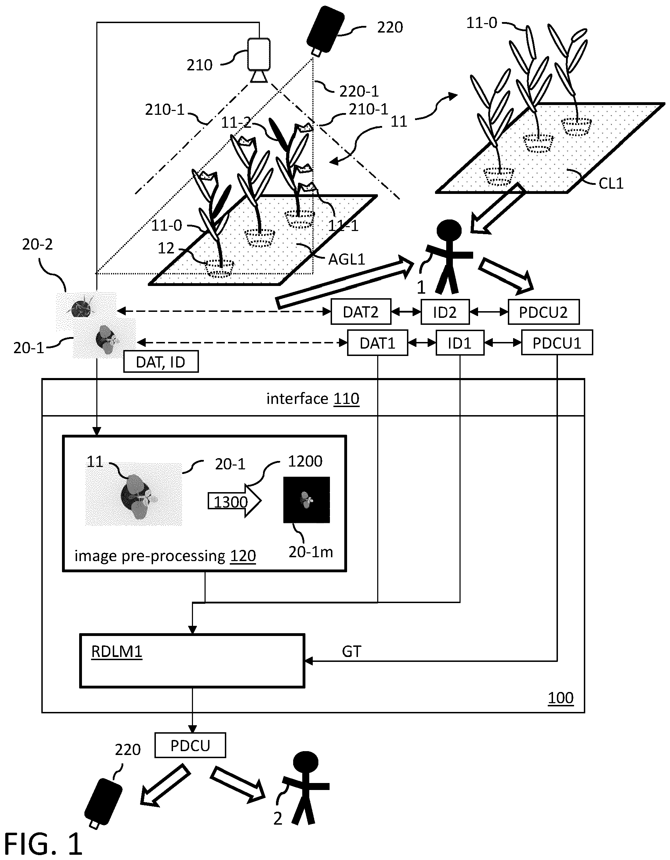

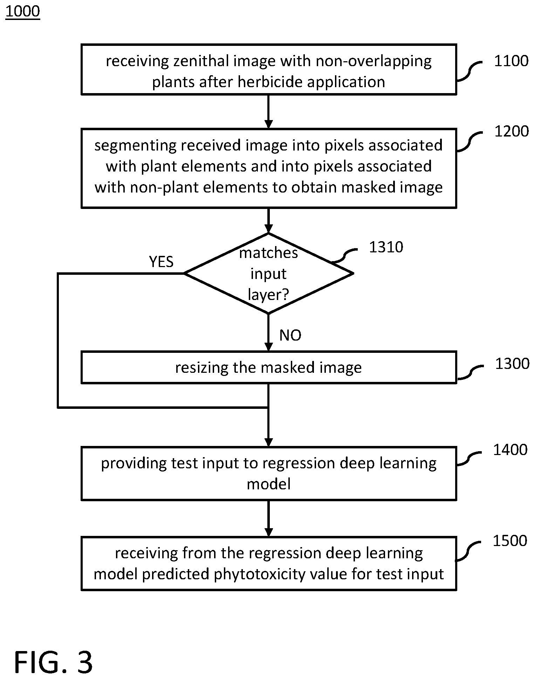

FIG. 1 includes a block diagram of a computer system 100 for estimating damage on plants caused by herbicide application treatment using a single regression deep learning model RDLM1. FIG. 3 is a simplified flow chart of a computer-implemented method 1000 estimating damage on plants caused by herbicide application. The method 1000 can be executed by the system 100. For this reason, FIG. 1 is described in view of FIG. 3 and the following description of FIG. 1 also refers to reference numbers used in FIG. 3.

The system 100 is communicatively coupled with an image recording device 210 via an interface 110 to receive 1100, from the image recording device, a zenithal image 20-1, 20- 2 representing a real-world situation at an agricultural growth location AGL1 with one or more non-overlapping plants of a particular plant species 11 after herbicide application. Thereby, the image is recorded a certain amount of time after the herbicide treatment (i.e. the application of the herbicide). This amount of time is typically referred to as "days-aftertreatment" DAT. Of course, the amount of time can also be given in other units (e.g., hours, minutes or even weeks) which can always be converted into a number of days value. That is, the use of the generally known term "days-after-treatment" is not meant to be limiting in the sense that the respective amount of time which has elapsed since the herbicide application has to be specified in days. For each recorded image, DAT is known and may either be stored directly as metadata of the respective image, or it may be stored in a separate database with a pointer to said image, or it may be directly entered into the system 100 for the recorded image by a user. Further, the plant species 11 of the plants on the image is also recorded. For example, the camera device recording the image may already be preset to said plant species when it is mounted at the agricultural growth location AGL1. In this case, a plant species identifier ID may be stored as metadata of the recorded image. The plant species may also be input by a farming user or it may be automatically determined by computer-implemented plant species identifier. For example, plant species identifiers based on classification convolutional neural networks are known in the art.

The angle of view 210-1 of the image recording device 210 is illustrated by the dash-dotted lines. The agricultural growth location AGL1 may be a section of an open field or a section in a greenhouse. In the greenhouse situation, the plants are typically grown in pots 12. The dashed lines used for the optional pots 12 indicate that in a field situation the plants are grown directly in the soil (ground).

The real-world situation in the agricultural growth location AGL1 is schematically illustrated by a plurality of plants of plant species 11 showing damage symptoms on some leaves. Thereby, the leaves of type 11-0 are healthy leaves with no damage symptoms. The leaves of type 11-1 show damage symptoms of a first type (e.g., leaf curling) and the leaves of type 11-2 show damage symptoms of a second type (e.g., necrosis). The plants growing in AGL1 were all treated with an herbicide. For example, an herbicide sprayer 220 has applied a particular herbicide to the area indicated by the dotted triangle 220-1.

If the agricultural growth location is used for obtaining training images with damaged plants, in the vicinity of such an agricultural growth training location AGL1, plants of the same plant species 11 are grown in a so-called control location CL1. The control location CL1 is in the vicinity of AGL1 if the plants are close enough to AGL1 so that basically the same growth conditions (humidity, temperature, illumination, etc.) prevail in both locations AGL1, CL1. Typically, the control location CL1 is a section located in the same field or greenhouse as the agricultural growth training location AGL1. However, the plants growing in the control location CL1 were not treated with said herbicide. Therefore, they provide a reference for the assessment of damages caused by the herbicide treatment. It is to be noted that images obtained as a test input for determining the damage degree of plants on that test input are typically derived from an agricultural growth location AGL1 which is not associated with a corresponding control location because the regression deep learning model has already been trained with said training images.

For example, the image recording device 210 may be a digital camera device which can provide images at resolutions of at least 3000 x 4000 pixels. With such a high resolution camera the field of view (illustrated by the dashed lines 210-1) of the camera 210 can be selected to cover a relatively large area (in the order of 1x1m²) of the agricultural field 10 and still provide sufficient image details to perform the herein disclosed image analysis by positioning the camera at an appropriate distance to the plant(s) (e.g., approximately one meter above the plants). Cameras with lower resolution may still be usable when selecting a smaller field of view and getting closer to the plant when recording the images. It is assumed that the recorded image 20-1, 20-2 includes a representation of at least one plant which may show damage symptoms of any damage types 11-1, 11-2 caused by herbicide treatment. For example, the camera may be mounted on a pillar/tripod located in the field/greenhouse, or it may be taken by a camera carried by a drone while flying over the field, or it may be mounted on the roof of a greenhouse. It is also possible that a human user (e.g., the farmer) takes a picture with a smartphone camera device from an elevated position (e.g., from a tractor seat).

The recorded image is sent to an image pre-processor 120 of the computer system 100 where it is further processed. The pre-processor 120 segments 1200 the received image 20-1, 20-2 into pixels associated with plant elements and into pixels associated with non-plant elements to obtain a masked image 20-1m. The segmentation is performed by using a damage agnostic plant segmentation algorithm. When applying the masked image 20-1m as a segmentation mask for the further processing of the image, the effect is that all pixels associated with non-plant elements are ignored for the further image processing by the regression deep learning model RDLM1.

When providing 1400 the masked image 20-1m to RDLM1 the size of the masked image has to match the size of the input layer of the regression deep learning model. The pre-processor 120 checks 1310 if the size of the masked image 20-1m matches the size of the input layer processor 120. If it does not match, the pre-processor resizes 1300 the masked image 20-1m to match the size of the input layer while preserving the aspect ratio. Preserving the aspect ratio is advantageous for the accuracy of the predictions provided by the deep learning model RDLM1. Because of the limited memory of GPUs used for implementing deep learning models, high resolution images of the size of the original received image can typically not be processed by such deep learning models. Therefore, a reduction in size may be applied to the image for allowing the direct processing of the reduced image by the deep learning model.

The relevant information for PDCU value estimation/prediction is contained in the plant portions of the image. Therefore, it is advantageous to discard as much as possible the non-plant related pixels in the image. This way it is ensured that the regression deep learning model which will further process the pre-processed image focuses its learning and prediction on plant elements. Consequently, plant segmentation is performed in the preprocessing stage where the segmentation algorithm needs to be able to recognize also pixels associated with any one of the previously described damage symptoms as pixels associated with plant elements. This damage agnostic property of the segmentation algorithm is particularly advantageous with regard to early or late necrosis symptoms which can easily be confused with soil.

In one implementation, the damage agnostic plant segmentation algorithm may be implemented by a segmentation algorithm as disclosed in "Johannes, A., Picon, A., Alvarez- Gila, A., Echazarra, J., Rodriguez-Vaamonde, S., Navajas, A. D., & Ortiz-Barredo, A. (2017). Automatic plant disease diagnosis using mobile capture devices, applied on a wheat use case. Computers and electronics in agriculture, 138, 200-209." The segmentation algorithm disclosed in sections 4.1.2. (and its subsections) can be used to divide an image into regions and after that, to detect "focused" regions. In this implementation, necrosis is detected as focused region whereas the soil is detected as unfocused region. That is, the segmentation algorithm is able to distinguish necrosis from soil. Plant element pixels associated with the other disclosed damage symptoms are recognized as belonging to the corresponding plants anyway. Therefore, the segmentation algorithm is damage agnostic according to the above definition.

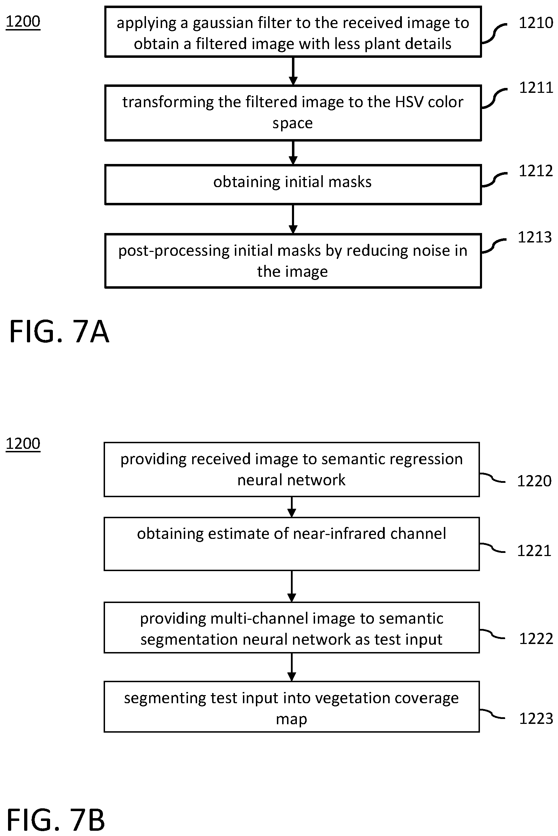

FIG. 7A illustrates an improved implementation of the damage agnostic plant segmentation algorithm with a flow chart showing details of the segmenting step 1200. In this improved implementation, the following steps are performed when the damage agnostic plant segmentation algorithm is executed by the computer system: applying 1210 a gaussian filter to the received image to obtain a filtered image with less plant details; transforming 1211 the filtered image to the HSV color space; obtaining 1212, through thresholding of the H and S planes, a first initial mask from the H plane to remove pixels of the transformed image presenting colors that are not likely to be present in the plant, and a second initial mask from the S plane to remove parts of the transformed image that belong to uniform background of the image; and post-processing 1213 the initial masks to obtain a segmentation mask by reducing noise in the image, the segmentation mask applied to the received image to obtain the masked image 20-1m.

In other words, the improved damage agnostic plant segmentation algorithm uses classical image processing techniques. Firstly, the algorithm applies a gaussian filter to the original image, in order to reduce the influence of small details of the plant(s) for the following steps of the segmentation algorithm. The filtered image is then transformed to the HSV color space. Through thresholding of the H and S planes, an initial mask is obtained covering the plant elements. The initial mask can be seen as an aggregate of two initial (sub-) masks. The first initial (sub-)mask obtained from the H plane removes the pixels of the image presenting colors that are not likely to be present in the plant. The second initial (sub- ) mask obtained from the S plane removes the parts of the image that are plain white, grey or similar. That is, the second initial mask removes the background of the image. Lab reference system for color space transformation is not used although clear discrimination can be made for green color, but brownish necrosis would be removed together with the soil. So, this color space representation has been discarded.

The mask is then postprocessed in order to remove some noise. This postprocessing may be different depending on the type of plant (broad leaf or grass plant species), due to their shape differences. For example, in the case of broad leaf plants, only the largest area detected in the mask may be maintained. In the case of grass plants (i.e. plants with narrow leaves), this would not be possible to do without removing pixels associated with plant elements. Therefore, all the elements above the threshold (of the H and S channels) are considered. The resulting mask (segmentation mask) is finally applied to the original image.

It is to be noted that segmenting necrotic parts of a plant from the soil is very difficult using classical image processing techniques. Therefore, in the case of a greenhouse with plants growing in pots it may be advantageous to not remove the soil pixels associated with the pot. It is advantageous for the regression deep learning model to "see" these necrotic plant parts for correct PDCU prediction.

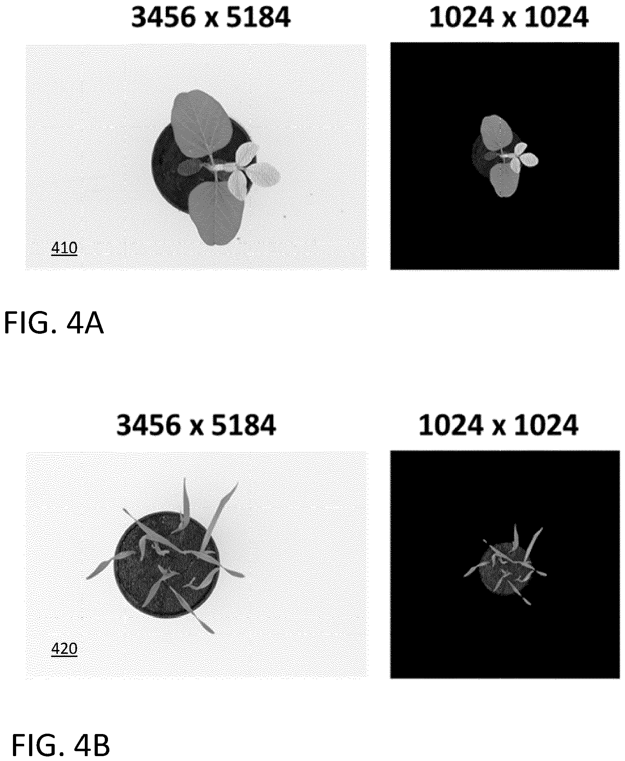

FIGs. 4A to 4D show segmentation results achieved by the improved implementation of the damage agnostic plant segmentation algorithm of FIG. 7A. FIGs. 4A and 4B relate to a greenhouse scenario with the received images showing single pot images with a GLXMA pot 410 (broad leaf plant), and with a TRZAW pot 420 (grass plant). The received images 410, 420 are high resolution images with 3456 x 5184 pixels. In the example, the corresponding masked images 411, 421 were resized to 1024 x 1024 pixels while preserving the aspect ratio. The input image of the regression deep learning model is usually a square image. In an example implementation, it was found that an input image of 1024x1024 pixels size is enough for the model to recognize the relevant information. As the original image is bigger and is not a square image, it has been resized accordingly without changing the aspect ratio, so that the deep learning model can correctly recognize the amount of biomass of the plant. In the greenhouse example, the segmentation algorithm cuts from the original image only the bounding box of the plant. This bounding box was pasted in the center of a square black image of size 4096 x 4096 pixels. This side size was chosen as being a value in the middle of the range between the height and the width of the original image (5184 x 3456). Finally, the resulting square image was resized to 1024 x 1024 pixels.

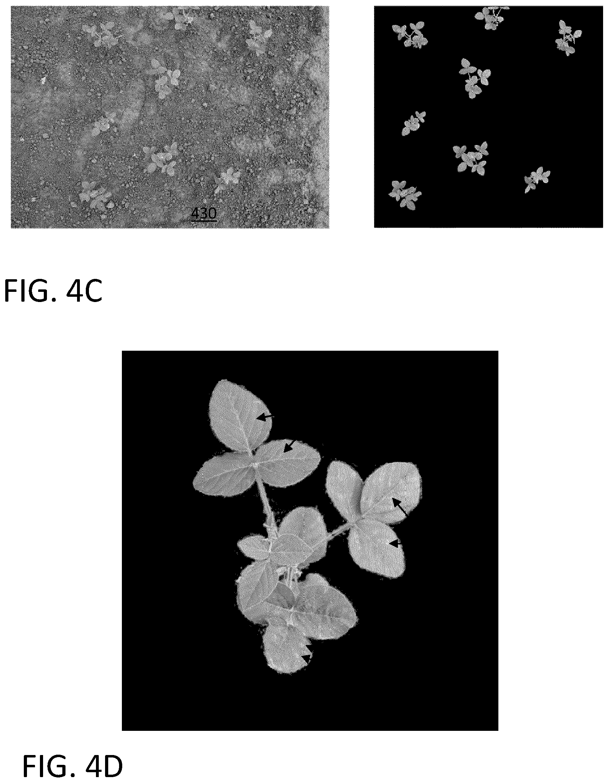

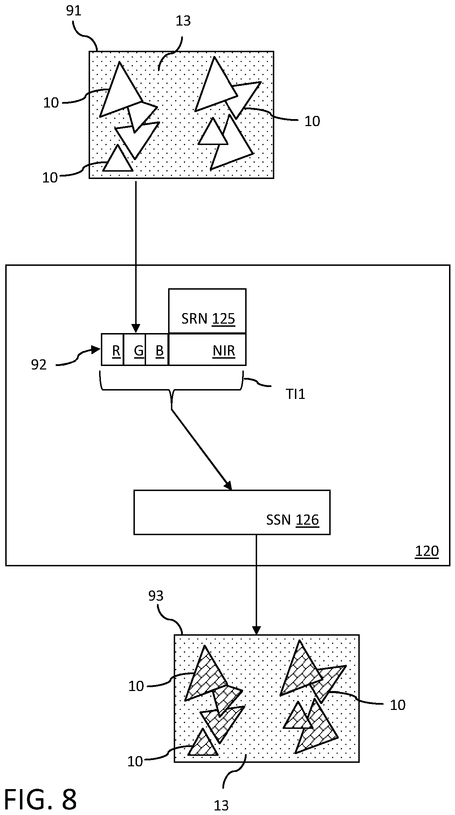

FIG. 4C relates to an open field scenario showing an image 430 with non-overlapping GLXMA plants growing in an agricultural field. The corresponding masked image 431 shows the segmented plant portions with the entire soil background turned into black pixels and thus being ignored for the further processing by the regression deep learning model. A damage agnostic plant segmentation algorithm which works well in an agriculturally field scenario is described in detail in the context of FIG. 8. FIG. 4D is a zoom picture 431-z for one of the plant portions which remained in the masked image 431. The zoomed picture 431-z shows, that the masked image shows enough details to distinguish healthy plant elements 431-h from damaged plant elements 431-d (bright spots indicate bleaching damage on the damaged plant elements).

An alternative implementation of the damage agnostic plant segmentation algorithm is illustrated in FIG. 8 in combination with the flowchart of FIG. 7B. In this implementation, the zenithal image 91 is recorded as an RGB image at an agricultural growth location by an appropriate RGB camera device. The triangle symbols 10 in the image 91 represent plant elements (e.g., leaves, stems, etc.) of plants (e.g., crop, weeds, trees, etc.) growing in the scenery 1. The camera device can be any digital camera device which provides RGB images. This includes all devices with integrated camera functions (e.g., smart phones or tablet computers). The RGB image 91 therefore includes pixels which represent plant elements 10 and includes pixels which represent non-plant parts 11 (e.g., soil, water, etc.) at the agricultural growth location. It is to be noted that pixels belonging to plant elements may be associated with only one plant species or with different plant species, dependent on the situation at the agricultural growth location.

The image 91 is received by the pre-processor 120 implementing the damage agnostic plant segmentation algorithm with the following modules. Thereby, an RGB image has three channels - a red channel R, a green channel G, and a blue channel B. The following example uses all RGB channels for NIR estimation and vegetation coverage prediction. However, a person skilled in the art can apply the method also by using only a subset of the RGB channels of the RGB image.

The RGB image 91 is then provided 1220 to a semantic regression neural network (SRN) 125. SRN 125 is trained to estimate at least a near-infrared channel NIR from the RGB image 91. SRN 125 has a topology based on a convolutional segmentation neural network with its last layer being substituted by a monotonic activation function and its loss function being substituted by a regression loss function. Convolutional segmentation networks are well known in the art and a person skilled in neural networks can perform such substitutions without major efforts. When training SRN 125, the neural network learns a pixel-wise regression transformation that transforms any RGB image from an R+G+B domain to a target domain comprising at least a near-infrared domain.

Examples for possible regression loss functions are: Mean Square Error (also known as Quadratic loss or L2 Loss), Mean Absolute Error (also known as L1 Loss), Huber Loss (also known as Smooth Mean Absolute Error), Log-Cosh Loss, and Quantile Loss. A comprehensive explanation of such regression loss function examples is available in the article "5 Regression Loss Functions All Machine Learners Should Know", Prince Grover, Jun 5, 2018, available at https://heartbeat.comet.ml/5-regression-loss-functions-all-machine-learners-should-know-4fb140e9d4b0. Each regression loss function can be used with any of the monotonic activation functions: linear, sigmoid or hyperbolic tangent.

In an example embodiment, a fully convolutional DenseNet architecture was employed as baseline network. This network combines the descriptive power from traditional segmentation networks based on fully convolutional versions of classification ones such as SegNet where the accuracy on the border detection is provided by the skip connections on the U-Net segmentation network. The last layer of this network has been substituted by a linear activation function and the loss function has been substituted by a mean absolute error in order to learn a pixel-wise regression transformation that translates the image from the source to the target domain. The image passes through a subsequent set of convolutional operations and max-pooling operations that reduce the spatial dimension of the signal while increasing the descriptive part gradually. This ends up to a descriptor image. A second stage is composed by a set of convolutional filters and up-sampling layers that recover the spatial resolution of the input image on the desired domain. To be able to recover the input image high level details, the network makes use of skip connections that transfer the low-level features and spatial information from the source domain into the detailed reconstruction of the target domain. A final N channel layer with a sigmoid layer activation performs the final reconstruction of the NIR.

The network was trained by minimizing a mean absolute error loss function which can be enhanced by an adversarial perceptual loss function following a pix2pix architecture. The addition of the perceptual adversarial loss functions ensures that the generated image is visually plausible and the estimated image cannot be distinguished from a real image by a specifically trained network.

For creating a training data set, 84 plots were planted combining the presence of the plant species. Each plot followed a different weed control treatment in order to generate damage on the different species. Two pictures per day were taken per plot by a Micasense RedEdge MX camera during 28 days. This camera has five different sensors: blue (450nm), green (560nm), red (650nm), red-edge (730nm) and NIR (840nm) and delivered 1280 x 920 pixel images. The RGB- and NIR channels of the camera were used to provide the training images of the training dataset. As each image band was taken by a different monochrome sensor, acquired images were co-registered by applying affine transformation that minimized the Mattes mutual information loss minimization between channels. Mattes mutual information loss minimize is explained, for example, in the paper: "Mattes, D., Haynor, D. R., Vesselle, H., Lewellyn, T. K., & Eubank, W. (2001, July). Nonrigid multimodality image registration. In Medical imaging 2001: image processing (Vol. 4322, pp. 1609-1620). International Society for Optics and Photonics." In other words, the R-, G- and B- channels of the used multispectral camera were not the normal RGB channels as provided by a smart phone or a digital single-lens reflex camera (DLSR) camera but cover a much narrower band of RGB. To enable SRN 120 to process RGB images recorded by standard RGB cameras, the RGB channels of the used multispectral camera were transformed into standard DLSR channels (real sRGB values) by multiplying the multispectral channels with a matrix: [R_DLSR, G_DLSR, B_DLSR]' = A*[R_SPECTRAL, G_ SPECTRAL, B_ SPECTRAL]', where A is a 3x3 matrix containing the contribution of each R_SPECTRAL, G_ SPECTRAL, B_ SPECTRAL into the R_DLSR, G_DLSR, B_DLSR channels.

From the registered images, images were randomly chosen and the vegetation coverage was manually segmented on the respective images. To avoid biasing, training, validation and testing datasets were selected plot-wise. 80% of the plots were randomly chosen for training whereas the 20% remaining were distributed into validation sets (10%) and testing sets (10%). All pictures were incorporated to the set determined by their plot number.

In more detail, training was performed over 224 x 224 pixel tiles that were extracted randomly from the full-size images during 100 epochs. The tiles are fed into the neural network. The Adam classifier [cf. Diederik P. Kingma and Jimmy Lei Ba. Adam: A method for stochastic optimization. 2014. arXiv:1412.6980v9] was employed for training and the learning rate was set to 10-5. A reduction of the learning rate is performed when the loss function value on the validation data set raises or stagnates. It can be appreciated that the use of the pix2pix based adversarial loss contributes not only to generate more plausible images but also reduces the error (difference) between the predicted and real NIR images, and reduces the regression loss. A plausible image, as used herein, is an imaged that reflects reality. For example, blue leaves of a crop plant would not be considered to be plausible.

The trained SRN 125 is then applied to the received RGB image 91 to obtain 1221 an estimate of the NIR channel. It is to be noted that there is no need to use a multispectral camera for providing the RGB images which serve as test inputs to the first neural network. Typically, a simple smartphone camera or DLSR camera may be used to record the RGB images to be analyzed.

The R-, G-, B-channels of the originally received RGB image and the estimated NIR channel are then provided 1222 as a test input TI1 to a semantic segmentation neural network SSN 126. These four channels form the multi-channel image 92. The SSN 126 has been trained before with a training data set comprising such multi-channel images of the test input type to segment the test input TI1 into pixels associated with plant elements and pixels not associated with plant elements.

SSN 126 has a similar structure as SRN 125. In an example embodiment, the input layer of SSN 126 is of size MxNxK, where M and N represent the width and height of the input image, and K represents the number of channels used. In an embodiment with R-G-, B- and NIR channels the number of input channels is K=4. Even less channels, such as for example, a R-NIR combination (K=2) or a R-G-NIR combination (K=3) or other subcombinations may be used. In more advanced embodiments, the number of channels can reach K=7 as explained further down below. In general, the channels are composed by the R 19 , G-, B-channels of the original RGB image and all estimated channels of the multi-channel image. The final layer of SSN 126 is composed by two output channels of size M and N (MxNx2) resembling the original size of the image. One output channel contains the estimate for the vegetation coverage segmentation and the other contains the estimate for non-vegetation (non-plant) classes. This is followed by a softmax activation layer that ensures the mutually exclusiveness of the two classes. SSN 126 may be minimized over a categorical cross-entropy loss function. Other segmentation loss functions, such as for example, weighted categorical cross-entropy, balanced cross-entropy, Focal loss, Focal loss plus Dice loss, Tversky loss, or Lovász-Softmax, or any appropriate combination thereof may also be used by a skilled person for training the semantic segmentation neural network.

The application of SSN 126 to the received test input TI1 segments 1223 the test input into pixels associated with plant elements 10 (vegetation class) and pixels not associated with plant elements 11 (non-vegetation class). The result of the segmentation is a so-called vegetation coverage map 93 which recognizes any pixel associated with a plant independent of damage symptoms. In particular, pixels which belong to necrotic parts of a plant are identified as plant pixels and can be clearly distinguished from soil pixels. The pixels belonging to the vegetation class then define the masked image for the further processing.

Turning back to FIG. 1, the regression deep learning model RDLM1 receives a test input comprising the masked image 20-1m provided 1400 by the pre-processor 120. Further, the respective number of days after treatment DAT, and the respective plant species identifier ID are provided 1400 as part of the test input. As described earlier, DAT and ID may be part of the metadata of the received image 20-1 or they may be otherwise entered into the system, e.g. by a user of the system.

The regression deep learning model RDLM1 has been trained with a plurality of plant images for multiple plant species and for multiple days-after-treatment values. In FIG. 1 the dashed double arrows relate to a situation where images 20-1, 20-2 would be part of the training data set for RDLM1. Of course, the skilled person will understand that images 20-1, 20-2 cannot be used as training images and test input simultaneously. Therefore, the dashed double arrows are to be understood as an association with any training image not being used as a test input for the system 100. Each training image of the training data set shows either one or more non-overlapping healthy plants or one or more non-overlapping damaged plants of a particular plant species ID1, ID2 at a particular number of days after treatment DAT1, DAT2. Thereby, the training data set includes images of healthy and damaged plants to allow RDLM1 to also learn about the biomass reduction of the plants in addition to the previously describe damage symptoms.

It is to be noted that, in addition to the variability of the training dataset with regard to plant species and days-after-treatment, a further variability may be introduced with regard to herbicides used for treatment. In other words, the training data set may further show herbicide variability in that different images of the training data set are associated with different applied herbicides. Different applied herbicides, as used herein, can either consist of different chemical compositions or may just differ with regard to the applied dose. That is, an herbicide having the same chemical composition but being applied with a different dose is also considered to be a different applied herbicide for the purpose of introducing herbicide variability into the training dataset. When training the regression deep learning model with herbicide variability, the system becomes more flexible in that it can handle any herbicide treatment. Without herbicide variability, the model would learn to make predictions only for a particular herbicide application which was used for the images of the training dataset. After having been trained, the regression deep learning model predicts phytotoxicity values PDCU for the respective test inputs solely based on the received image 20-1, the associated plant species identifier ID as well as the days-after-treatment value DAT. The PDCU output may then be received 1500 from the regression deep learning model by a display function to show the predicted value to a human user 2. Alternatively, the value may be received by a software application to be further processed. For example, the value may be used by a sprayer application to determine future herbicide treatment data based on the detected damage level for controlling the sprayer appliance 220.

Each training image is annotated by an expert 1 with a phytotoxicity value PDCU1, PDCU2 as ground truth. The phytotoxicity value reflects the expert's assessment of a damage degree of one or more plants on a respective training image in comparison to plants of the control location CL1 in the vicinity of the agricultural growth location AGL1 in accordance with predefined assessment rules. Every herbicide treatment may cause one or more symptoms at a time. Experts 1 consider the PDCU value to be a mixed value where both, the biomass reduction and the detected symptom(s), are considered. Not all the symptoms have the same relevance for the damage estimation. The whole damage in the plant is represented by this value.

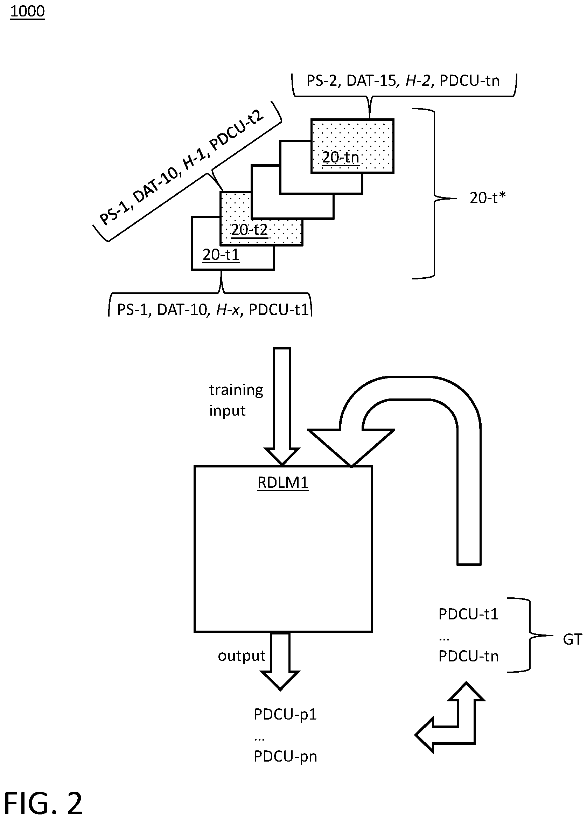

FIG. 2 describes the training process of the regression deep learning model RDLM1 in more detail. The training data set 20-t* includes a plurality of training images 20-t1 to 20 tn. The training dataset includes images with healthy (untreated) plants indicated by a white filling. For untreated plants no herbicide was applied which is indicated by the "H-x"-label in the example of image 20-t1. Damaged plant images 20-t2, 20-tn are indicated by the dotted filling. In the example, the training dataset 20-t* also uses herbicide variability which is indicated by the herbicides H-1 and H-2 which were applied to the plants shown on images 20-t2 and 20-tn, respectively. When the test images are provided as training input to RDLM1, each training image 20-t1, 20-t2, ..., 20-tn is provided together with: the corresponding plant species identifier PS-1, PS-1, ..., PS-2, the corresponding days-aftertreatment value DAT-10, DAT-10, ..., DAT-15, and the corresponding ground truth PDCU value PDCU-t1, PDCU-t2, ..., PDCU-tn. Optionally, in case of using herbicide variability, also the corresponding herbicide identifiers H-x, H-1, ..., H-2 may be provided. From observations of control plants for GLXMA and AMARE on the one hand, and observations of control plants for TRZAW and ECHCG on the other hand, it can be noticed that the rhythms of growth are different. For instance, AMARE at DAT-2 (i.e., two days after treatment) can show as much biomass as GLXMA at DAT-4 (four days after treatment). This may lead to wrong learning of the expected biomass amount at a specific date. By adding the additional information daysafter- treatment and plant species identifier and as part of the input to RDLM1 together with the image this problem gets solved.

RDLM1 then processes each training input and determines a predicted PDCU value as output PDCU-p1 to PDCU-pn based on the current training state of the model. The predicted outputs are compared with the corresponding ground truth values PDCU-t1 to PDCU-tn and, after the processing of each training input, the weights of RDLM1 are adjusted accordingly.

For collecting images to train a prototype of RDLM1 the following procedure was applied. An acquisition campaign took place in a greenhouse. Two crops were selected: GLXMA and TRZAW, and one associated weed per crop, AMARE and ECHCG, respectively. The proposed method was evaluated for two broad leaf species (GLXMA and AMARE) and two grasses (TRZAW and ECHCG). Different trials were made to have different situations for every crop and weed, according to the herbicide applied in the treatment and the applied dose. Different damages were provoked in the treated plants. The objective was to have a wide range of situations where the algorithm has to estimate the damage percentage of the plant. It was paid attention to the fact that on each training image only non-overlapping plants were present.

Experts assessed the plant damage visually for each training image by looking at and even touching the real plants. That is, the experts were in possession of the 3D information of the plant(s). A camera on top of the plant taking a zenithal view does neither capture the height nor the strength and consistency of the plant. The third dimension is lost. However, for the experts the 3D information can provide valuable information in particular for the assessment of biomass reduction.

Images were acquired in the greenhouse with different natural illumination conditions (cloudy, sunny days) along several months. No artificial illumination was used. Images were taken with a high-resolution camera (5184 x 3456 pixels). Conditions for acquisition were the same in all the images. According to experts, biomass reduction in the plant is a main symptom of the effect of an herbicide. So, the biomass reduction of the plant(s) in relation to respective plants from the control location seriously affects the PDCU value estimated by the experts. For biomass comparison both the treated plant(s) and the control plant(s) must be in the same scale, with the same pixel resolution. For this reason, an acquisition distance has been established.

The acquisition conditions which were present for recording the training dataset for developing the prototype are summarized in the following: There was a zenithal view (90º) and the resolution was 0.085 mm/pixel. Further acquisition conditions had been:
- Reference focal: 35mm
- Distance camera - pot/soil surface: 78 cm (DAT<11)
- Distance camera - pot/soil surface: 98 cm (DAT >=11, needed due to growth)
- No zoom, no changes in focal
- Uniform white - light grey background

General comments about acquisition are the following:
- Application of herbicide is post-emergency, that is, the seed has already germinated.
- The acquisition conditions above have been the reference of this project.
- They depend on the camera and the optics.
- Other cameras at other fixed distances are also feasible.
- Resolution to be obtained is 0.085 mm/pixel.
- Image resolution should be high (used camera is 5184 x 3456 pixels).
- Other possible backgrounds are possible with corresponding adjustment of the pre-processing stages.

As mentioned earlier, in the training dataset 20-t* four plant species (two crops and two associated weeds) were used: GLXMA (and its weed AMARE) and TRZAW (and its weed ECHCG). GLXMA and AMARE are broad leaf plants, and TRZAW and ECHCG are grass. As aforementioned, the experts assessed the PDCU values as values representing the degree of damage of the respective plants. This damage degree was assessed through observation of different symptoms after application of an herbicide. These symptoms are not present in an untreated control location. The untreated control location was used as reference to establish the damage in the agricultural growth location to be evaluated.

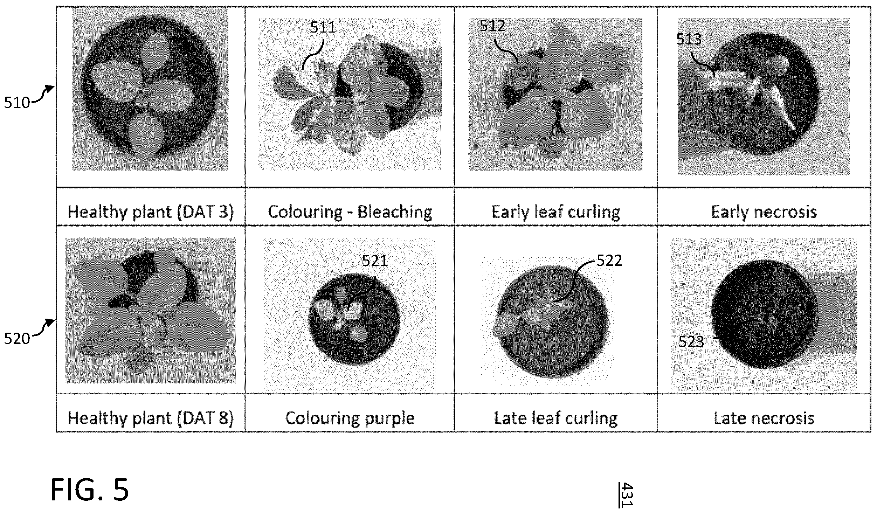

Turning briefly to FIG. 5, the two rows 510, 520 show examples of various damage symptoms at two different days after treatment period. In row 510, a healthy (untreated) AMARE plant is shown in comparison to three damaged plants three days after herbicide treatment DAT 3. In row 520, the situation is shown for GLXMA plants eight days after herbicide treatment DAT 8. The observation of different damage symptoms after application of an herbicide allows to assess the degree of damage (PDCU value) caused by the herbicide treatment. These damage symptoms are not present on plants growing in an untreated control pot as shown in the first image of each row 510, 520. The untreated control pot is a reference for the damage degree in the treated pots.

Often, biomass reduction is considered to be the most important damage symptom. The chemical products (herbicides) can inhibit the growth of the plants and therefore, the biomass is reduced. Biomass is the alive tissue in the plant, i.e. all tissue of the plant not affected by necrosis. Biomass is not only green pixels. Some regions with other colors, such as yellowish for chlorosis, white pixels 511 for bleaching, or pixels 521 with purple coloring need to be considered as biomass as well. Biomass reduction can only be estimated in comparison to a reference control location. The control location indicates how the real growing state of the plant would have to be after the respective days-after-treatment period. In trial experiments used herein, there was always a control location representing this adequate growing stage. The evaluation period for every plant in the trial was about 20- 21 days. Every plant was assessed daily unless the plant died before that time, or after scoring a PDCU of 100%, when it is no longer evaluated. In the experiments, only postemergency situation has been considered, this is, the seed had already germinated. The remaining images of row 510 show pixels 512 of the damage type early leaf curling, and pixels 513 of the damage type early necrosis at three days after treatment. The remaining images of row 510 show pixels 522 of damage type late leaf curling, and pixels 523 of the damage type 523.

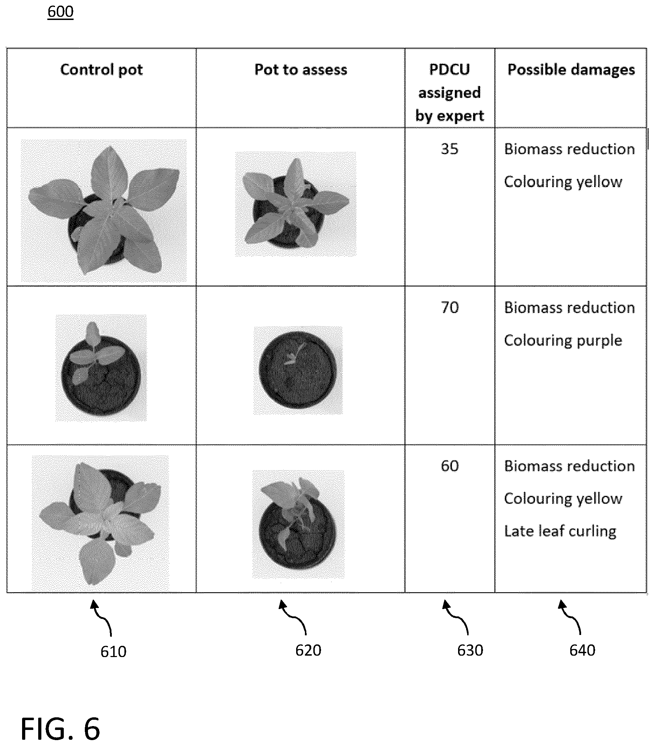

Turning briefly to FIG. 6, table 600 shows three examples of PDCU values (column 630) which were assigned by an expert to a particular herbicide treated pot in column 620 showing damaged AMARE plants in comparison to a corresponding control pot in column 610. A corresponding control pot is a pot with a plant of the same species which is at the same growth stage as the plant in the pot to assess and which was not treated with herbicides. A PDCU value of 0% indicates a healthy plant and a PDCU value of 100% indicates a dead plant. In column 640 the possible damages recognized by the expert are listed. For example, the first image row shows an AMARE plant with relatively small damages (biomass reduction and coloring yellow) compared to the control pot. The expert assigned a PDCU value of 35% to this pot. In the second image row of table 600, a much higher damage (biomass reduction and coloring purple) is recognized by the expert. For this pot a PDCU value of 70% has been assigned. As mentioned above, the assessment by experts is subjective and the inter-rater variability with regard to PDCU values assigned to the same pot by different experts was estimated around 10-15%. Despite such variability, the trained regression deep learning model outputs predictions for phytotoxicity values (PDCU) in response to test inputs with a high level of accuracy which exceeds the accuracy of the expert's assessments.

The topology used for implementing the regression deep learning model is based on a deep convolutional neural network topology. It can be based on any of the following topologies: VGG, ResNet, ResNeXt, SE-ResNet, SE-ResNeXt, SE-Net, DenseNet, Inception ResNet V2, Inception V3, Xception, NASNet, MobileNet, or MobileNet v2. The regression deep learning model uses a regression loss function, and further uses an optimizer which can be any of the following: stochastic gradient descent, RMSProp, or Adam. The implementation which provided the most accurate PDCU predictions included a topology based on a ResNet34 topology with a mean-squared-error loss function and a stochastic gradient descent optimizer.

PDCU values are typically assigned in 5% steps 0%, 5%, 10%, ...., 90%, 95%, and 100%. Additionally, a 98% value is normally distinguished from 100%. The regression output provides a float value ranging from 0.0 to 1.0. In one implementation, the output is multiplied by 100 to obtain the final PDCU value as a percentage value. It may be rounded to the nearest integer, and finally it may be rounded to a value multiple of 5, except for the admitted value of 98. The output which is obtained by this implementation has the same format and expected values as the PDCU values provided by experts. It is therefore easily comparable with the Ground Truth values provided as annotations by the experts. In this implementation, the regression deep learning model output provides the same resolution (5%) as provided by the manual PDCU assessments by the experts although the regression model can of course provide higher resolution from a mathematical point of view in other implementations. The last layer for the regression branch (PDCU estimation) in this implementation has a 'sigmoid' activation. The learning rate was also varied with 0.001 being the final value.

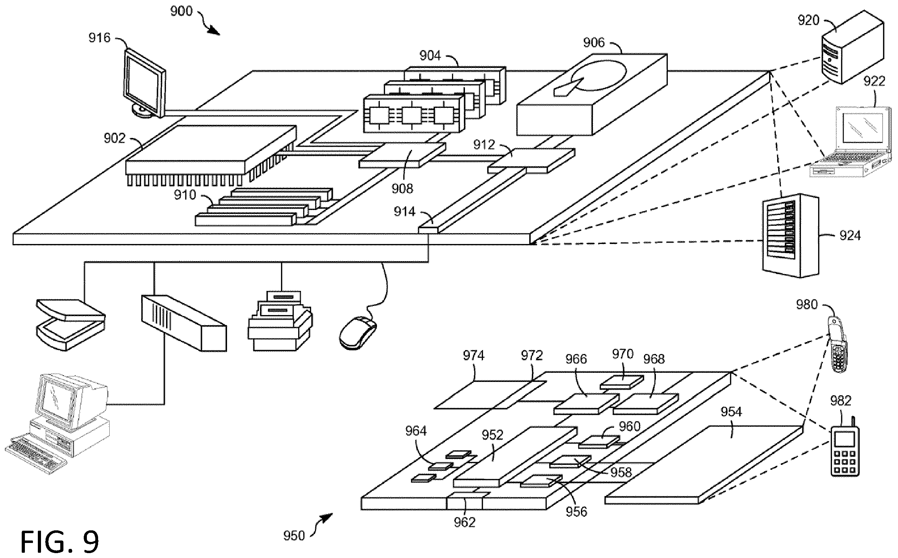

FIG. 9 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Ideally, device 900 has a GPU adapted to process machine learning algorithms. Generic computer device 900 may correspond to the computer system 100 of FIG. 1. Computing device 950 is intended to represent various forms of mobile devices, such as personal digital assistants, cellular telephones, smart phones, and other similar computing devices. For example, computing device 950 may be used as a GUI frontend for a user to capture test input images and provide them to the computer device 900, and in turn, receive from the computer device, the predicted PDCU value. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processing units and/or multiple buses may be used, as appropriate, along with multiple memories and types of memory. Also, multiple computing devices 900 may be connected, with each device providing portions of the necessary operations (e.g., as a server bank, a group of blade servers, or a processing device).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processing units. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the claims

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer-implemented method (1000) for estimating damage on plants (11) caused by herbicide treatment, the method using a regression deep learning model (RDLM1), comprising:
receiving (1100) a zenithal image (20-1) representing a real-world situation at an agricultural growth location (AGL1) with one or more non-overlapping plants (11), the zenithal image associated with a particular plant species identifier (ID1), wherein the one or more plants have been subject to herbicide treatment, with the zenithal image being recorded a certain number of days after the treatment (DAT1);
segmenting (1200), by using a damage agnostic plant segmentation algorithm, the received image (20-1) into pixels associated with plant elements and into pixels associated with non-plant elements to obtain a masked image (20-1m) with the pixels associated with non-plant elements being ignored for further processing;
if the masked image (20-1m) does not match the size of an input layer of the single regression deep learning model (RDLM1), resizing (1300) the masked image (20-1m) to match the size of the input layer while preserving the aspect ratio;
providing (1400) to the input layer a test input comprising the masked image (20- 1m), the respective number of days after treatment (DAT1), and the respective plant species identifier (ID1), wherein the regression deep learning model has been trained with a plurality of plant images for multiple plant species and for multiple days-aftertreatment values, with each training image showing either one or more non-overlapping healthy plants at a control location or one or more non-overlapping damaged plants of a particular plant species at an agricultural growth training location, at a particular number of days after treatment, each training image annotated by an expert with a phytotoxicity value (PDCU*) as ground truth, wherein the phytotoxicity value reflects the expert's assessment of a damage degree of one or more plants on the respective training image in comparison to plants of the control location (CL1) in the vicinity of the agricultural growth training location (AGL1) in accordance with predefined assessment rules; and
receiving (1500), from the regression deep learning model, a predicted phytotoxicity value (PDCU) for the test input.

2. The method of claim 1, wherein the damage agnostic plant segmentation algorithm comprises:
applying (1210) a gaussian filter to the received image to obtain a filtered image with less plant details;
transforming (1211) the filtered image to the HSV color space;
obtaining (1212), through thresholding of the H and S planes, a first initial mask obtained from the H plane to remove pixels of the transformed image presenting colors that are not likely to be present in plant elements, and obtaining a second initial mask from the S plane to removes parts of the transformed image that belong to uniform background of the image; and
post-processing (1213) the initial masks to obtain a segmentation mask by reducing noise in the image, the segmentation mask applied to the received image to obtain the masked image (20-1m).

3. The method of claim 1, wherein the damage agnostic plant segmentation algorithm comprises:
providing (1220) at least one channel of the received image to a semantic regression neural network (125), the semantic regression neural network trained to estimate at least a near-infrared channel (NIR) from the at least one channel of the received image, the semantic regression neural network (125) having a topology based on a convolutional segmentation neural network with its last layer being substituted by a monotonic activation function and its loss function being substituted by a regression loss function, to learn a pixel-wise regression transformation that transforms any RGB channel from an RGB domain to a target domain comprising at least a near-infrared domain;
obtaining (1221) an estimate of the near-infrared channel (NIR) by applying the semantic regression neural network (125) to the RGB image (91);
providing (1222) a multi-channel image (92) comprising at least one of the R-, G-, B channels (R, G, B) of the RGB image, and the estimated near-infrared channel (NIR), as test input (TI1) to a semantic segmentation neural network (126), the semantic segmentation neural network trained with a training data set comprising multichannel images of the test input type to segment the test input (TI1) into pixels associated with plant elements and pixels not associated with plant elements; and
segmenting (1223) the test input (TI1) using the semantic segmentation neural network (130) resulting in a segmentation mask (93) indicating pixels of the test input associated with plant elements (10) and indicating pixels of the test input not associated with plant elements, the segmentation mask applied to the received image to obtain the masked image.

4. The method of any of the previous claims, wherein the damage is of any one of the following damage types: early necrosis, late necrosis, early leaf curling, late leaf curling, white coloring, purple coloring, and yellow coloring, and biomass reduction.

5. The method of any of the previous claims, wherein the regression deep learning model is based on a deep convolutional neural network topology selected from the group of: VGG, ResNet, ResNeXt, SE-ResNet, SE-ResNeXt, SE-Net, DenseNet, Inception ResNet V2, Inception V3, Xception, NASNet, MobileNet, and MobileNet v2, using a regression loss function, and using an optimizer selected from the group of: stochastic gradient descent, RMSProp, and Adam.

6. The method of claim 5, wherein the topology is a ResNet34 topology, the regression loss function is mean-squared-error, and the optimizer is stochastic gradient descent.

7. The method of any of the previous claims, wherein affine transformations have been applied to a subset of the training images while maintaining zoom factor and scale for the images of the subset.

8. The method of any of the previous claims, wherein the training data set further shows herbicide variability in that different images of the training data set are associated with different applied herbicides where the different applied herbicides consist of different chemical compositions or differ with regard to the applied dose, and the regression deep learning model has learned to predict phytotoxicity values for test inputs associated with different applied herbicides.

9. A computer program product for determining damage on plants (11) at an agricultural growth location (10) after herbicide application, the computer program product, when loaded into a memory of a computing device and executed by at least one processor of the computing device, causing the at least one processor to execute the steps of the computer-implemented method according to any one of the previous claims.

10. A computer system (100) for estimating damage on plants caused by herbicide application using a single regression deep learning model (RDLM1), comprising:
an interface (110) configured to receive a zenithal image (20-1) representing a realworld situation at an agricultural growth location (AGL1) with one or more non-overlapping plants associated with a particular plant species identifier (ID), wherein the one or more plants have been subject to herbicide treatment, with the zenithal image being recorded a certain number of days after the treatment (DAT);
an image pre-processor (120) configured: to segment, by using a damage agnostic plant segmentation algorithm, the received image (20-1) into pixels associated with plant elements and into pixels associated with non-plant elements, and to obtain a masked image (20-1m) with the pixels associated with non-plant elements being removed, and further, if the masked image (20-1m) does not match the size of an input layer of the single regression deep learning model (RDLM1), to resize the masked image (20-1m) to match the size of the input layer while preserving the aspect ratio of the filtered image the input layer;
the regression deep learning model (RDLM1) configured to receive a test input comprising the masked image (20-1m), the respective number of days after treatment (DAT), and the respective plant species identifier (ID1), and further configured to output a predicted phytotoxicity value (PDCU) for the test input, wherein the regression deep learning model has been trained with a plurality of plant images for multiple plant species and for multiple days-after-treatment values, with each training image showing either one or more non-overlapping healthy plants or one or more non-overlapping damaged plants of a particular plant species at a particular number of days after treatment, each training image being annotated by an expert with a phytotoxicity value (PDCU*) as ground truth, wherein the phytotoxicity value reflects the expert's assessment of a damage degree of one or more plants on the respective training image in comparison to plants of a control location (CL1) in the vicinity of an agricultural growth training location (AGL1) in accordance with predefined assessment rules.

11. The system of claim 10, wherein the damage agnostic plant segmentation algorithm is configured to perform the following steps when being executed by the computer system:
applying a gaussian filter to the received image to obtain a filtered image with less plant details;
transforming the filtered image to the HSV color space;
obtaining, through thresholding of the H and S planes, a first initial mask from the H plane to remove pixels of the transformed image presenting colors that are not likely to be present in the plant, and obtaining a second initial mask from the S plane to remove parts of the transformed image that belong to uniform background of the image; and
post-processing the initial masks to obtain a segmentation mask by reducing noise in the image, the segmentation mask applied to the received image to obtain the masked image (20-1m).

12. The system of any of the claims 10 to 11, wherein the damage is of any one of the following damage types: biomass reduction, early necrosis, late necrosis, early leaf curling, late leaf curling, white colouring, purple colouring, and yellow colouring.

13. The system of any of the claims 10 to 12, wherein the regression deep learning model is based on a deep convolutional neural network topology selected from the group of: VGG, ResNet, ResNeXt, SE-ResNeXt, SE-Net, DenseNet, Inception ResNet V2, Inception V3, Xception, NASNet, MobileNet, and MobileNet v2, using a regression loss function, and using an optimizer selected from the group of: stochastic gradient descent, RMSProp, and Adam.

14. The system of claim 13, wherein the topology is a ResNet34 topology, the regression loss function is mean-squared-error, and the optimizer is stochastic gradient descent.

15. The system of any of the claims 9 to 14, wherein affine transformations have been applied to a subset of the training images while maintaining zoom factor and scale for the images of the subset.

16. The system of any of the claims 9 to 15, wherein the training data set further shows herbicide variability in that different images of the training data set are associated with different applied herbicides where the different applied herbicides consist of different chemical compositions or differ with regard to the applied dose, and the regression deep learning model has learned to predict phytotoxicity values for test inputs associated with applications of different herbicides.

## Patentansprüche

1. Computerimplementiertes Verfahren (1000) zum Schätzen der Schädigung von Pflanzen (11), die durch eine Herbizidbehandlung verursacht wird, wobei das Verfahren ein Regressions-Deep-Learning-Modell (RDLM1) verwendet, umfassend:
Empfangen (1100) eines Zenitbilds (20-1), das eine reale Situation an einem landwirtschaftlichen Anbaustandort (AGL1) mit einer oder mehreren sich nicht überlappenden Pflanzen (11) darstellt, wobei das Zenitbild einer bestimmten Pflanzenartkennung (ID1) zugeordnet ist, wobei die eine oder mehreren Pflanzen einer Herbizidbehandlung unterzogen wurden und wobei das Zenitbild eine bestimmte Anzahl von Tagen nach der Behandlung (DAT1) aufgezeichnet wird;
Segmentieren (1200) des empfangenen Bilds (20-1) unter Verwendung eines schadensunabhängigen Pflanzensegmentierungsalgorithmus in Pixel, die Pflanzenelementen zugeordnet sind, und in Pixel, die Nicht-Pflanzenelementen zugeordnet sind, um ein maskiertes Bild (20-1m) zu erhalten, bei dem die Nicht-Pflanzenelementen zugeordneten Pixel bei der weiteren Verarbeitung ignoriert werden;
wenn das maskierte Bild (20-1m) nicht mit der Größe einer Eingabeebene des einzelnen Regressions-Deep-Learning-Modells (RDLM1) übereinstimmt, Anpassen der Größe (1300) des maskierten Bilds (20-1m), damit es der Größe der Eingabeebene entspricht und gleichzeitig das Seitenverhältnis beibehalten wird;
Bereitstellen (1400) für die Eingabeebene einer Testeingabe, die das maskierte Bild (20-1m), die jeweilige Anzahl von Tagen nach der Behandlung (DAT1) und die jeweilige Pflanzenartenkennung (ID1) umfasst, wobei das Regressions-Deep-Learning-Modell mit einer Vielzahl von Pflanzenbildern für mehrere Pflanzenarten und für mehrere Werte für die Tage nach der Behandlung trainiert wurde, wobei jedes Trainingsbild entweder eine oder mehrere nicht überlappende gesunde Pflanzen an einem Kontrollstandort oder eine oder mehrere nicht überlappende beschädigte Pflanzen einer bestimmten Pflanzenart an einem landwirtschaftlichen Anbautrainingsort entsprechend einer bestimmten Anzahl von Tagen nach der Behandlung zeigt, wobei jedes Trainingsbild von einem Experten mit einem Phytotoxizitätswert (PDCU*) als Ground-Truth annotiert ist, wobei der Phytotoxizitätswert die Einschätzung des Experten hinsichtlich eines Schädigungsgrades einer oder mehrerer Pflanzen auf dem jeweiligen Trainingsbild im Vergleich zu Pflanzen des Kontrollstandorts (CL1) in der Nähe des landwirtschaftlichen Anbautrainingsorts (AGL1) gemäß vordefinierten Bewertungsregeln widerspiegelt; und Empfangen (1500) eines vorhergesagten Phytotoxizitätswerts (PDCU) für die Testeingabe aus dem Regressions-Deep-Learning-Modell.

2. Verfahren nach Anspruch 1, wobei der schadensunabhängige Pflanzensegmentierungsalgorithmus umfasst:
Anwenden (1210) eines Gauß-Filters auf das empfangene Bild, um ein gefiltertes Bild mit weniger Pflanzendetails zu erhalten;
Tranformieren (1211) des gefilterten Bilds in den HSV-Farbraum;
Erhalten (1212), durch Schwellenwertbildung der H- und S-Ebene, einer ersten Anfangsmaske aus der H-Ebene, um Pixel des transformierten Bilds zu entfernen, die Farben aufweisen, die wahrscheinlich nicht in Pflanzenelementen vorhanden sind, und Erhalten einer zweiten Anfangsmaske aus der S-Ebene, um Teile des transformierten Bilds zu entfernen, die zum einheitlichen Hintergrund des Bilds gehören; und
Nachbearbeiten (1213) der Anfangsmasken, um eine Segmentierungsmaske durch Reduzieren von Bildrauschen zu erhalten, wobei die Segmentierungsmaske auf das empfangene Bild angewendet wird, um das maskierte Bild (20-1m) zu erhalten.

3. Verfahren nach Anspruch 1, wobei der schadensunabhängige Pflanzensegmentierungsalgorithmus umfasst:
Bereitstellen (1220) mindestens eines Kanals des empfangenen Bilds an ein neuronales Netzwerk zur semantischen Regression (125), wobei das neuronale Netzwerk zur semantischen Regression mit einem Trainingsdatensatz zum Schätzen mindestens eines Nahinfrarotkanals (NIR) aus dem mindestens einen Kanal des empfangenen Bilds trainiert wurde, wobei das neuronale Netzwerk zur semantischen Regression (125) eine Topologie basierend auf einem neuronalen Faltungsnetzwerk zur Segmentierung aufweist, wobei seine letzte Schicht durch eine monotone Aktivierungsfunktion ersetzt wird und seine Verlustfunktion durch eine Regressionsverlustfunktion ersetzt wird, um eine pixelbasierte Regressionstransformation zu lernen, die einen beliebigen RGB-Kanal aus einem RGB-Bereich in einen Zielbereich, umfassend mindestens einen Nahinfrarotbereich, transformiert;
Erhalten (1221) einer Schätzung des Nahinfrarotkanals (NIR) durch Anwenden des neuronalen Netzwerks zur semantischen Regression (125) auf das RGB-Bild (91);
Bereitstellen (1222) eines Mehrkanalbilds (92), umfassend mindestens einen der R-, G-, B-Kanäle (R, G, B) des RGB-Bilds und den geschätzten Nahinfrarotkanal (NIR) als Testeingabe (TI1) in ein neuronales Netzwerk zur semantischen Segmentierung (126), wobei das neuronale Netzwerk zur semantischen Segmentierung mit einem Trainingsdatensatz, umfassend Mehrkanalbilder des Testeingabetyps zum Segmentieren der Testeingabe (TI1) in Pixel, die Pflanzenelementen zugeordnet sind, und Pixel, die keinen Pflanzenelementen zugeordnet sind, trainiert wird; und
Segmentieren (1223) der Testeingabe (TI1) unter Verwendung des neuronalen Netzwerks zur semantischen Segmentierung (130), was in einer Vegetationssegmentierungskarte (93) resultiert, die Pixel der Testeingabe, die Pflanzenelementen (10) zugeordnet sind, angibt und Pixel der Testeingabe, die keinen Pflanzenelementen zugeordnet sind, angibt, wobei die Segmentierungsmaske auf das empfangene Bild angewendet wird, um das maskierte Bild zu erhalten.

4. Verfahren nach einem der vorhergehenden Ansprüche, wobei der Schaden einer der folgenden Schadenstypen ist: frühe Nekrose, späte Nekrose, frühes Einrollen der Blätter, spätes Einrollen der Blätter, weiße Verfärbung, violette Verfärbung und gelbe Verfärbung und Verminderung der Biomasse.

5. Verfahren nach einem der vorhergehenden Ansprüche, wobei das Regressions-Deep-Learning-Modell auf einer Topologie eines tiefen neuronalen Faltungsnetzwerk basiert, das aus der folgenden Gruppe ausgewählt wird: VGG, ResNet, ResNeXt, SE-ResNet, SE-ResNeXt, SE-Net, DenseNet, Inception ResNet V2, Inception V3, Xception, NASNet, MobileNet und MobileNet v2, unter Verwendung einer Regressionsverlustfunktion und unter Verwendung eines Optimierers, der aus der folgenden Gruppe ausgewählt wird: stochastischer Gradientenabstieg, RMSProp und Adam.

6. Verfahren nach Anspruch 5, wobei die Topologie eine ResNet34-Topologie ist, die Regressionsverlustfunktion der mittlere quadratische Fehler ist und der Optimierer ein stochastischer Gradientenabstieg ist.

7. Verfahren nach einem der vorhergehenden Ansprüche, wobei affine Transformationen auf eine Teilmenge der Trainingsbilder angewendet wurden, während der Vergrößerungsfaktor und Maßstab für die Bilder der Teilmenge beibehalten wurden.

8. Verfahren nach einem der vorhergehenden Ansprüche, wobei der Trainingsdatensatz ferner eine Variabilität der Herbizide zeigt, indem verschiedene Bilder des Trainingsdatensatzes verschiedenen angewendeten Herbiziden zugeordnet sind, wobei die verschiedenen angewendeten Herbizide aus verschiedenen chemischen Zusammensetzungen bestehen oder sich hinsichtlich der angewendeten Dosis unterscheiden, und das Regressions-Deep-Learning-Modell gelernt hat, Phytotoxizitätswerte für Testeingaben vorherzusagen, die verschiedenen angewendeten Herbiziden zugeordnet sind.

9. Computerprogrammprodukt zum Bestimmen der Schädigung von Pflanzen (11) an einem landwirtschaftlichen Anbaustandort (10) nach der Herbizidanwendung, wobei das Computerprogrammprodukt, wenn es in einen Speicher eines Computergeräts geladen und von mindestens einem Prozessor des Computergeräts ausgeführt wird, bewirkt, dass der mindestens eine Prozessor die Schritte des computerimplementierten Verfahrens nach einem der vorhergehenden Ansprüche ausführt.

10. Computersystem (100) zum Schätzen der Schädigung von Pflanzen, die durch eine Herbizidanwendung verursacht wird, unter Verwendung eines Regressions-Deep-Learning-Modells (RDLM1) umfassend:
eine Schnittstelle (110), die dazu konfiguriert ist, um eines Zenitbild (20-1) zu empfangen, das eine reale Situation an einem landwirtschaftlichen Anbaustandort (AGL1) mit einer oder mehreren sich nicht überlappenden Pflanzen darstellt, das einer bestimmten Pflanzenartkennung (ID) zugeordnet ist, wobei die eine oder mehreren Pflanzen einer Herbizidbehandlung unterzogen wurden und wobei das Zenitbild eine bestimmte Anzahl von Tagen nach der Behandlung (DAT) aufgezeichnet wird;
einen Bildvorprozessor (120), der dazu konfiguriert ist, das empfangene Bild (20-1) unter Verwendung eines schadensunabhängigen Pflanzensegmentierungsalgorithmus in Pixel, die Pflanzenelementen zugeordnet sind, und in Pixel, die Nicht-Pflanzenelementen zugeordnet sind, zu segmentieren und ein maskiertes Bild (20-1m) zu erhalten, wobei die Nicht-Pflanzenelementen zugeordneten Pixel entfernt werden, und ferner, wenn das maskierte Bild (20-1m) nicht mit der Größe einer Eingabeebene des einzelnen Regressions-Deep-Learning-Modells (RDLM1) übereinstimmt, die Größe des maskierten Bilds (20-1m) so zu ändern, dass es der Größe der Eingabeebene entspricht, während das Seitenverhältnis des gefilterten Bilds in der Eingabeebene erhalten bleibt;
das Regressions-Deep-Learning-Modell (RDLM1), das dazu konfiguriert ist, eine Testeingabe zu empfangen, die das maskierte Bild (20-1m), die jeweilige Anzahl von Tagen nach der Behandlung (DAT) und die jeweilige Pflanzenartenkennung (ID1) umfasst, und ferner dazu konfiguriert ist, einen vorhergesagten Phytotoxizitätswert (PDCU) für die Testeingabe auszugeben, wobei das Regressions-Deep-Learning-Modell mit einer Vielzahl von Pflanzenbildern für mehrere Pflanzenarten und für mehrere Werte für die Tage nach der Behandlung trainiert wurde, wobei jedes Trainingsbild entweder eine oder mehrere nicht überlappende gesunde Pflanzen oder eine oder mehrere nicht überlappende beschädigte Pflanzen einer bestimmten Pflanzenart entsprechend einer bestimmten Anzahl von Tagen nach der Behandlung zeigt, wobei jedes Trainingsbild von einem Experten mit einem Phytotoxizitätswert (PDCU*) als Ground-Truth annotiert wird, wobei der Phytotoxizitätswert die Einschätzung des Experten hinsichtlich eines Schädigungsgrades einer oder mehrerer Pflanzen auf dem jeweiligen Trainingsbild im Vergleich zu Pflanzen eines Kontrollstandorts (CL1) in der Nähe eines landwirtschaftlichen Anbautrainingsorts (AGL1) gemäß vordefinierten Bewertungsregeln widerspiegelt.

11. System nach Anspruch 10, wobei der schadensunabhängige Pflanzensegmentierungsalgorithmus dazu konfiguriert ist, bei Ausführung durch das Computersystem die folgenden Schritte durchzuführen:
Anwenden eines Gauß-Filters auf das empfangene Bild, um ein gefiltertes Bild mit weniger Pflanzendetails zu erhalten;
Transformieren des gefilterten Bilds in den HSV-Farbraum; Erhalten, durch Schwellenwertbildung der H- und S-Ebene, einer ersten Anfangsmaske aus der H-Ebene, um Pixel des transformierten Bilds zu entfernen, die Farben aufweisen, die wahrscheinlich nicht in der Pflanze vorhanden sind, und Erhalten einer zweiten Anfangsmaske aus der S-Ebene, um Teile des transformierten Bilds zu entfernen, die zum einheitlichen Hintergrund des Bilds gehören; und
Nachbearbeiten der Anfangsmasken, um eine Segmentierungsmaske durch Reduzieren von Bildrauschen zu erhalten, wobei die Segmentierungsmaske auf das empfangene Bild angewendet wird, um das maskierte Bild (20-1m) zu erhalten.

12. System nach einem der Ansprüche 10 bis 11, wobei der Schaden einer der folgenden Schadenstypen ist: Verminderung der Biomasse, frühe Nekrose, späte Nekrose, frühes Einrollen der Blätter, spätes Einrollen der Blätter, weiße Verfärbung, violette Verfärbung und gelbe Verfärbung.

13. System nach einem der Ansprüche 10 bis 12, wobei das Regressions-Deep-Learning-Modell auf einer Topologie eines tiefen neuronalen Faltungsnetzwerk basiert, das aus der folgenden Gruppe ausgewählt wird: VGG, ResNet, ResNeXt, SE-ResNeXt, SE-Net, DenseNet, Inception ResNet V2, Inception V3, Xception, NASNet, MobileNet und MobileNet v2, unter Verwendung einer Regressionsverlustfunktion und unter Verwendung eines Optimierers, der aus der folgenden Gruppe ausgewählt wird: stochastischer Gradientenabstieg, RMSProp und Adam.

14. System nach Anspruch 13, wobei die Topologie eine ResNet34-Topologie ist, die Regressionsverlustfunktion der mittlere quadratische Fehler ist und der Optimierer ein stochastischer Gradientenabstieg ist.

15. System nach einem der Ansprüche 9 bis 14, wobei affine Transformationen auf eine Teilmenge der Trainingsbilder angewendet wurden, während der Vergrößerungsfaktor und Maßstab für die Bilder der Teilmenge beibehalten wurden.

16. System nach einem der Ansprüche 9 bis 15, wobei der Trainingsdatensatz ferner eine Variabilität der Herbizide zeigt, indem verschiedene Bilder des Trainingsdatensatzes verschiedenen angewendeten Herbiziden zugeordnet sind, wobei die verschiedenen angewendeten Herbizide aus verschiedenen chemischen Zusammensetzungen bestehen oder sich hinsichtlich der angewendeten Dosis unterscheiden, und das Regressions-Deep-Learning-Modell gelernt hat, Phytotoxizitätswerte für Testeingaben vorherzusagen, die Anwendungen von verschiedenen Herbiziden zugeordnet sind.

## Revendications

1. Procédé mis en œuvre par ordinateur (1000) pour estimer les dommages causés aux plantes (11) par un traitement herbicide, le procédé utilisant un modèle d'apprentissage profond par régression (RDLM1), et comprenant les étapes suivantes :
recevoir (1100) une image zénithale (20-1) représentant une situation réelle sur un emplacement de culture agricole (AGL1) avec une ou plusieurs plantes (11) ne se chevauchant pas, l'image zénithale étant associée à un identifiant d'espèce végétale (ID1) particulier, où les une ou plusieurs plantes ont été traitées à l'herbicide, l'image zénithale étant enregistrée un certain nombre de jours après le traitement (DAT1) ;
segmenter (1200), en utilisant un algorithme de segmentation des plantes indépendant des dommages, l'image reçue (20-1) en pixels associés à des éléments végétaux et en pixels associés à des éléments non végétaux pour obtenir une image masquée (20-1m), les pixels associés à des éléments non végétaux étant ignorés pour un traitement ultérieur ;
si l'image masquée (20-1m) ne correspond pas à la taille d'une couche d'entrée du modèle d'apprentissage profond par régression unique (RDLM1), redimensionner (1300) l'image masquée (20-1m) pour qu'elle corresponde à la taille de la couche d'entrée tout en préservant le rapport d'aspect ;
fournir (1400) à la couche d'entrée une entrée de test comprenant l'image masquée (20-1m), le nombre respectif de jours après traitement (DAT1) et l'identificateur respectif d'espèce végétale (ID1), où le modèle d'apprentissage profond par régression a été entraîné avec une pluralité d'images de plantes pour de multiples espèces végétales et pour de multiples valeurs de jours après traitement, chaque image d'apprentissage montrant soit une ou plusieurs plantes saines non superposées à un emplacement de contrôle, soit une ou plusieurs plantes endommagées non superposées d'une espèce végétale particulière à un emplacement d'apprentissage de culture agricole, à un nombre de jours donné après le traitement, chaque image d'apprentissage étant annotée par un expert avec une valeur de phytotoxicité (PDCU*) comme vérité terrain, où la valeur de phytotoxicité reflète l'évaluation par l'expert d'un degré de dommage d'une ou plusieurs plantes sur l'image d'apprentissage respective par rapport aux plantes de l'emplacement de contrôle (CL1) à proximité de l'emplacement de culture agricole (AGL1) conformément à des règles d'évaluation prédéfinies ; et
recevoir (1500), à partir du modèle d'apprentissage profond par régression, une valeur de phytotoxicité prédite (PDCU) pour l'entrée de test.

2. Procédé selon la revendication 1, dans lequel l'algorithme de segmentation de plantes indépendant des dommages comprend les étapes suivantes :
appliquer (1210) un filtre gaussien à l'image reçue pour obtenir une image filtrée avec moins de détails végétaux ;
transformer (1211) l'image filtrée dans l'espace colorimétrique HSV ;
obtenir (1212), par seuillage des plans H et S, un premier masque initial obtenu à partir du plan H pour supprimer les pixels de l'image transformée présentant des couleurs qui ne sont pas susceptibles d'être présentes dans les éléments végétaux, et obtenir un deuxième masque initial à partir du plan S pour supprimer les parties de l'image transformée qui appartiennent à l'arrière-plan uniforme de l'image ; et
post-traiter (1213) les masques initiaux pour obtenir un masque de segmentation en réduisant le bruit dans l'image, le masque de segmentation étant appliqué à l'image reçue pour obtenir l'image masquée (20-1m).

3. Procédé selon la revendication 1, dans lequel l'algorithme de segmentation de plantes indépendant des dommages comprend les étapes suivantes :
fournir (1220) au moins un canal de l'image reçue à un réseau neuronal de régression sémantique (125), le réseau neuronal de régression sémantique étant formé pour estimer au moins un canal d'infrarouge proche (NIR) à partir de l'au moins un canal de l'image reçue, le réseau neuronal de régression sémantique (125) ayant une topologie basée sur un réseau neuronal à segmentation convolutive dont la dernière couche est remplacée par une fonction d'activation monotone et dont la fonction de perte est remplacée par une fonction de perte de régression, pour apprendre une transformation de régression par pixel qui transforme n'importe quel canal RVB en le faisant passer d'un domaine RVB à un domaine cible comprenant au moins un domaine d'infrarouge proche ;
obtenir (1221) une estimation du canal d'infrarouge proche (NIR) en appliquant le réseau neuronal de régression sémantique (125) à l'image RVB (91) ;
fournir (1222) une image multicanal (92) comprenant au moins un des canaux R-, V-, B- (R, V, B) de l'image RVB, et le canal d'infrarouge proche (NIR) estimé, comme entrée de test (TI1) d'un réseau neuronal à segmentation sémantique (126), le réseau neuronal à segmentation sémantique entraîné avec un ensemble de données d'apprentissage comprenant des images multicanal du type d'entrée de test pour segmenter l'entrée de test (TI1) en pixels associés aux éléments végétaux et en pixels non associés à des éléments végétaux ; et
segmenter (1223) l'entrée de test (TI1) à l'aide du réseau neuronal à segmentation sémantique (130) pour obtenir un masque de segmentation (93) indiquant les pixels de l'entrée de test associés aux éléments végétaux (10) et indiquant les pixels de l'entrée de test non associés aux éléments végétaux, le masque de segmentation étant appliqué à l'image reçue pour obtenir l'image masquée.

4. Procédé selon l'une quelconque des revendications précédentes, dans lequel les dommages sont de l'un quelconque des types de dommages suivants : nécrose précoce, nécrose tardive, enroulement précoce des feuilles, enroulement tardif des feuilles, coloration blanche, coloration violette, et coloration jaune, et réduction de la biomasse.

5. Procédé selon l'une quelconque des revendications précédentes, dans lequel le modèle d'apprentissage profond par régression est basé sur une topologie de réseau neuronal convolutif profond choisie dans le groupe constitué par : VGG, ResNet, ResNeXt, SE-ResNet, SE-ResNeXt, SE-Net, DenseNet, Inception ResNet V2, Inception V3, Xception, NASNet, MobileNet et MobileNet v2, en utilisant une fonction de perte de régression et un optimiseur choisi dans le groupe suivant : descente de gradient stochastique, RMSProp et Adam.

6. Procédé selon la revendication 5, dans lequel la topologie est une topologie ResNet34, la fonction de perte de régression est l'erreur quadratique moyenne et l'optimiseur est la descente de gradient stochastique.

7. Procédé selon l'une quelconque des revendications précédentes, dans lequel des transformations affines ont été appliquées à un sous-ensemble des images d'apprentissage tout en maintenant le facteur de zoom et l'échelle pour les images du sous-ensemble.

8. Procédé selon l'une quelconque des revendications précédentes, dans lequel l'ensemble de données d'apprentissage montre en outre une variabilité des herbicides en ce que différentes images de l'ensemble de données d'apprentissage sont associées à différents herbicides appliqués, les différents herbicides appliqués étant constitués de compositions chimiques différentes ou différant en ce qui concerne la dose appliquée, et le modèle d'apprentissage profond par régression a appris à prédire des valeurs de phytotoxicité pour des entrées de test associées à différents herbicides appliqués.

9. Produit programme informatique permettant de déterminer les dommages causés aux plantes (11) dans un emplacement de culture agricole (10) après l'application d'un herbicide, le programme informatique, lorsqu'il est chargé dans la mémoire d'un dispositif informatique et exécuté par au moins un processeur du dispositif informatique, amenant l'au moins un processeur à exécuter les étapes du procédé mis en œuvre par ordinateur selon l'une quelconque des revendications précédentes.

10. Système informatique (100) pour estimer les dommages causés aux plantes par l'application d'un herbicide à l'aide d'un modèle d'apprentissage profond par régression unique (RDLM1), le système comprenant :
une interface (110) configurée pour recevoir une image zénithale (20-1) représentant une situation réelle sur un emplacement de culture agricole (AGL1) avec une ou plusieurs plantes non superposées associées à un identifiant d'espèce végétale (ID) particulier, où les une ou plusieurs plantes ont été traitées à l'herbicide, l'image zénithale étant enregistrée un certain nombre de jours après le traitement (DAT) ;
un préprocesseur d'image (120) configuré : pour segmenter, en utilisant un algorithme de segmentation de plantes indépendant des dommages, l'image reçue (20-1) en pixels associés à des éléments végétaux et en pixels associés à des éléments non végétaux, et pour obtenir une image masquée (20-1m) avec les pixels associés à des éléments non végétaux supprimés et, en outre, si l'image masquée (20-1m) ne correspond pas à la taille d'une couche d'entrée du modèle d'apprentissage profond par régression unique (RDLM1), redimensionner l'image masquée (20-1m) pour qu'elle corresponde à la taille de la couche d'entrée tout en préservant le rapport d'aspect de l'image filtrée la couche d'entrée ;
le modèle d'apprentissage profond par régression (RDLM1) configuré pour recevoir une entrée de test comprenant l'image masquée (20-1m), le nombre respectif de jours après traitement (DAT) et l'identifiant respectif de l'espèce végétale (ID1), et configuré en outre pour fournir en sortie une valeur de phytotoxicité prédite (PDCU) pour l'entrée de test, où le modèle d'apprentissage profond par régression a été formé avec une pluralité d'images de plantes pour plusieurs espèces de plantes et pour plusieurs valeurs de jours après traitement, chaque image d'apprentissage montrant soit une ou plusieurs plantes saines non superposées, soit une ou plusieurs plantes endommagées non superposées d'une espèce de plante particulière à un nombre particulier de jours après traitement, chaque image d'apprentissage étant annotée par un expert avec une valeur de phytotoxicité (PDCU*) comme vérité terrain, où la valeur de phytotoxicité reflète l'évaluation par l'expert d'un degré de dommage d'une ou plusieurs plantes sur l'image d'apprentissage respective par rapport aux plantes d'un emplacement de contrôle (CL1) à proximité d'un emplacement d'apprentissage de culture agricole (AGL1) conformément à des règles d'évaluation prédéfinies.

11. Système selon la revendication 10, dans lequel l'algorithme de segmentation de plantes indépendant des dommages est configuré pour effectuer les étapes suivantes lorsqu'il est exécuté par le système informatique :
appliquer un filtre gaussien à l'image reçue pour obtenir une image filtrée avec moins de détails des plantes ;
transformer l'image filtrée dans l'espace colorimétrique HSV ;
obtenir, par seuillage des plans H et S, un premier masque initial à partir du plan H pour éliminer les pixels de l'image transformée présentant des couleurs qui ne sont pas susceptibles d'être présentes dans la plante, et obtenir un deuxième masque initial à partir du plan S pour éliminer les parties de l'image transformée qui appartiennent à un arrière-plan uniforme de l'image ; et post-traiter les masques initiaux pour obtenir un masque de segmentation en réduisant le bruit dans l'image, le masque de segmentation étant appliqué à l'image reçue pour obtenir l'image masquée (20-1m).

12. Système selon l'une quelconque des revendications 10 et 11, dans lequel le dommage est de l'un quelconque des types de dommages suivants : réduction de la biomasse, nécrose précoce, nécrose tardive, enroulement précoce des feuilles, enroulement tardif des feuilles, coloration blanche, coloration violette et coloration jaune.

13. Système selon l'une quelconque des revendications 10 à 12, dans lequel le modèle d'apprentissage profond par régression est basé sur une topologie de réseau neuronal convolutif profond sélectionnée dans le groupe constitué par : VGG, ResNet, ResNeXt, SE-ResNeXt, SE-Net, DenseNet, Inception ResNet V2, Inception V3, Xception, NASNet, MobileNet et MobileNet v2, en utilisant une fonction de perte de régression et un optimiseur choisi dans le groupe suivant : descente de gradient stochastique, RMSProp et Adam.

14. Système selon la revendication 13, dans lequel la topologie est une topologie ResNet34, la fonction de perte de régression est l'erreur quadratique moyenne et l'optimiseur est la descente de gradient stochastique.

15. Système selon l'une quelconque des revendications 9 à 14, dans lequel des transformations affines ont été appliquées à un sous-ensemble des images d'apprentissage tout en maintenant le facteur de zoom et l'échelle pour les images du sous-ensemble.

16. Système selon l'une quelconque des revendications 9 à 15, dans lequel l'ensemble de données d'apprentissage montre en outre une variabilité des herbicides en ce que différentes images de l'ensemble de données d'apprentissage sont associées à différents herbicides appliqués, les différents herbicides appliqués étant constitués de compositions chimiques différentes ou différant en ce qui concerne la dose appliquée, et le modèle d'apprentissage profond par régression a appris à prédire des valeurs de phytotoxicité pour des entrées de test associées à des applications de différents herbicides.
